# EUROPEAN PATENT SPECIFICATION

(11) **EP 4 506 830 B1**
(45) Date of publication and mention of the grant of the patent: **25.11.2026**
(21) Application number: 24193825.7
(22) Date of filing: 09.08.2024
(51) Int. Cl.: G06F 13/42, H04L 67/125, G06F 3/06, G06F 9/455, G06F 13/40, G06F 13/38, G06F 13/10, G06F 9/4401, H04L 41/084, H04L 41/0895, H04L 61/5038

(54) **UNIVERSAL SERIAL BUS CONTROLLER**
UNIVERSELLE SERIELLE BUSSTEUERUNG
CONTRÔLEUR DE BUS SÉRIE UNIVERSEL

(30) Priority: 10.08.2023 US 202318447534
(43) Date of publication of application: 12.02.2025
(73) Proprietor: Synaptics Incorporated, San Jose, CA 95131 (US)
(72) Inventor: THAKAR, Bhavik Hemantkumar, San Jose, 95131 (US); ELLIS, Dan Rastom, San Jose, 95131 (US)
(74) Representative: J A Kemp LLP

(56) References cited:
- EP-B1- 2 845 114
- US-A1- 2011 029 692
- US-A1- 2018 143 932
- US-B1- 6 976 105

## Description

### TECHNICAL FIELD

The present embodiments relate generally to a Universal Serial Bus ("USB") controller, and specifically to a USB controller for managing and virtually operating one or more USB devices coupled to the USB controller.

### BACKGROUND OF RELATED ART

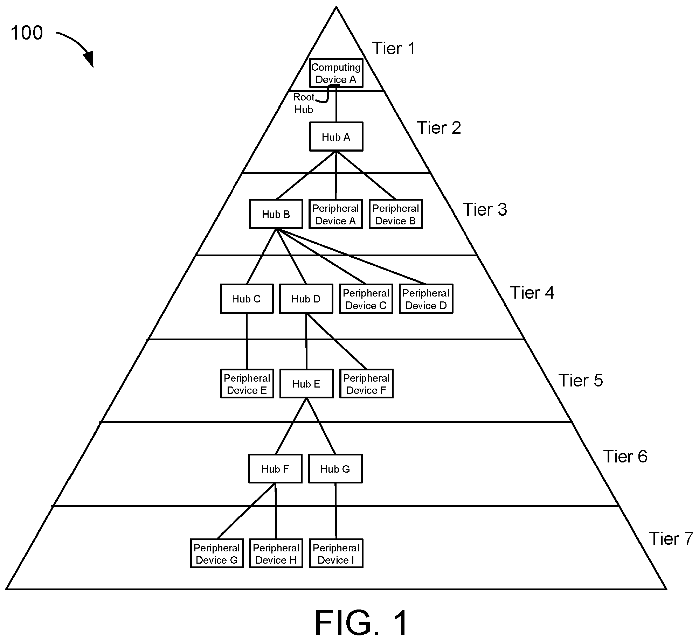

USB refers to technical standards, such as USB 1.0-4.0, which specify protocols and physical interfaces for connecting various computing devices. As used herein, the term "USB hardware" refers to any physical communication media (e.g., a wired or wireless interface, a port, a cable, or a connector) that conforms to one or more of the USB technical standards. USB can be used to connect one or more peripheral devices (e.g., a mouse or a keyboard) to a computing device (e.g., a personal computer ("PC")) using a tiered-star topology. Figure 1 shows an example tiered-star topology 100, which may include up to seven tiers (e.g., tiers 1-7) of devices (e.g., a computing device and one or more peripheral devices and/or hubs) that are connected using USB hardware. As shown in Figure 1, the topology 100 may include a computing device A in tier 1, peripheral devices A-I in tiers 3-5 and 7, and hubs A-G in tiers 2-6. The computing device A may include a root hub which connects one or more devices in tier 2 to the computing device A. For simplicity, only one device (the hub A) is shown in tier 2 of the topology 100. As shown in Figure 1, each of the hubs A-G may be used to couple one or more devices to the computing device A, for example, via daisy-chaining. It is noted that a device that resides in a given tier (e.g., tier 4) is said to be "downstream" of a device in a higher tier (e.g., tier 3), and "upstream" of a device in a lower tier (e.g., tier 5).

The computing device A operates as a "USB host device," which is a device that manages USB transactions, such as data exchanges, between the USB host device and one or more peripheral devices (e.g., the peripheral devices A-I) and/or hubs (e.g., the hubs A-G) that are coupled to the USB host device using USB hardware. A USB host device may also supply power to, and/or initiate all communications with, the one or more peripheral devices and/or hubs.

The peripheral devices A-I and the hubs A-G operate as "USB devices," which are devices that may be connected, using USB hardware, to a host device (e.g., the computing device A). However, in the topology 100, one or more of the peripheral devices A-I and the hubs A-G may operate not only as a USB device, but also as a USB host device (also referred to herein as a "dual role device"). For example, as a dual role device, the hub F in tier 6 may operate as a USB device that is coupled to the computing device A in tier 1, and as a USB host device configured to manage USB transactions between the hub F and the peripheral devices G and H, in tier 7.

Each USB device is configured to perform one or more functions (or capabilities). For example, a USB device that is a printer is configured to perform the function of printing. Where a USB device is configured to perform more than one function, the USB device may be referred to as a "composite USB device." For example, a USB device that includes both a keyboard and a trackpad is a composite USB device because the USB device is configured to perform multiple functions including, for example, (i) receiving user input via depressed buttons on the keyboard and (ii) receiving user input via detecting a finger or stylus in contact with the trackpad. Each USB device includes at least one "class code" which identifies the functionality of the USB device. For example, a USB device that is a microphone may include the class code, 01h. When the USB device (the microphone) is connected to a USB host device, the USB host device may begin to enumerate the USB device. During the enumeration, the USB host device may, for example, detect the USB device and retrieve the class code, 01h, from the USB device. The USB host device may also determine, based on the class code, 01h, that the USB device is a microphone. Further, the USB host device may use the class code, 01h, to identify and load a device driver (e.g., a standard device driver) from the operating system of the USB host device, where the device driver enables the USB host device to operate the USB device.

Some USB host devices communicate with one or more USB devices using a media agnostic USB protocol (also referred to herein as "MA-USB"). MA-USB is compatible with the USB 2.0, 3.0, and 3.1 standards, and enables both wireless and wired communication between a USB host device and one or more USB devices. Devices that support MA-USB (e.g., devices configured to communicate using MA-USB) may be referred to herein as "MA-USB devices." However, in order for a USB host device to communicate with one or more USB devices using MA-USB, a software ("SW") driver that facilitates MA-USB must be installed on the USB host device. Such a driver is not pre-installed on, or included in the operating system of, many existing USB host devices.

US 6,976,105 B1 discloses an apparatus and method for attaching multiple devices to a host. EP2 845 114 B1 discloses an extensible WSE hub to support a multi-hop tree of USB hubs or peripherals over a wireless link. US 2018/0143932 A1 discloses apparatuses and methods to spawn multiple virtual serial bus hub instances on a same physical serial bus hub. US 2011/0029692 A1 discloses a receiver configured to pair to multiple wireless devices.

### SUMMARY

This Summary is provided to introduce in a simplified form a selection of concepts that are further described below in the Detailed Description. This Summary is not intended to identify key features or essential features of the claimed subject matter, nor is it intended to limit the scope of the claimed subject matter.

One innovative aspect of the subject matter of this disclosure can be implemented in a method performed by a USB controller. The method may include retrieving a plurality of descriptors from a plurality of USB devices coupled to the USB controller using MA-USB. Each of the plurality of USB devices may be associated with at least one descriptor of the plurality of descriptors. The method may further include modifying at least one descriptor of the plurality of descriptors, and generating a first virtual USB device based at least in part on modifying the at least one descriptor. The method may also include outputting a first address associated with the first virtual USB device to a computing device using USB.

Another innovative aspect of the subject matter of this disclosure can be implemented in a USB controller that includes a processing system and a memory. The memory may store instructions that, when executed by the processing system, cause the USB controller to retrieve a plurality of descriptors from a plurality of USB devices coupled to the USB controller using MA-USB. Each of the plurality of USB devices may be associated with at least one descriptor of the plurality of descriptors. Execution of the instructions may further cause the USB controller to modify at least one descriptor of the plurality of descriptors, and generate a first virtual USB device based at least in part on modifying the at least one descriptor. Further, execution of the instructions may cause the USB controller to output a first address associated with the first virtual USB device to a computing device using USB.

Another innovative aspect of the subject matter of this disclosure can be implemented in a system that includes a computing device, a plurality of USB devices, and a USB controller. The USB controller may be coupled to the computing device and the plurality of USB devices. The USB controller may be configured to retrieve a plurality of descriptors from the plurality of USB devices using MA-USB. Each of the plurality of USB devices may be associated with at least one descriptor of the plurality of descriptors. The USB controller may be further configured to modify at least one descriptor of the plurality of descriptors, and generate a first virtual USB device based at least in part on modifying the at least one descriptor. The USB controller may also be configured to output a first address associated with the first virtual USB device to the computing device using USB.

### BRIEF DESCRIPTION OF THE DRAWINGS

The present embodiments are illustrated by way of example and are not intended to be limited by the figures of the accompanying drawings.
FIG. 1 shows an example tiered-star topology.
FIG. 2A shows an example electronic system, in accordance with some embodiments.
FIG. 2B shows an example electronic system, in accordance with some embodiments.
FIG. 2C shows an example electronic system, in accordance with some embodiments.
FIG. 3A shows an example set of descriptors associated with a USB device, in accordance with some embodiments.
FIGS. 3B shows an example set of descriptors associated with a USB human interface device, in accordance with some embodiments.
FIG. 4A shows example descriptors associated with USB devices, in accordance with some embodiments.
FIG. 4B shows an example set of descriptors associated with a virtual USB device, in accordance with some embodiments.
FIG. 5A shows example descriptors associated with human interface devices, in accordance with some embodiments.
FIG. 5B shows an example set of descriptors associated with a virtual USB device, in accordance with some embodiments.
FIG. 6 shows an example electronic system, in accordance with some embodiments.
FIG. 7 shows a block diagram of an example system, in accordance with some embodiments.
FIG. 8 shows an illustrative flowchart of an example operation 800, in accordance with some embodiments.

### DETAILED DESCRIPTION

In the following description, numerous specific details are set forth such as examples of specific components, circuits, and processes to provide a thorough understanding of the present disclosure. The term "coupled" as used herein means connected directly to or connected through one or more intervening components or circuits. The terms "electronic system" and "electronic device" may be used interchangeably to refer to any system capable of electronically processing information. Also, in the following description and for purposes of explanation, specific nomenclature is set forth to provide a thorough understanding of the aspects of the disclosure. However, it will be apparent to one skilled in the art that these specific details may not be required to practice the example embodiments. In other instances, well-known circuits and devices are shown in block diagram form to avoid obscuring the present disclosure. Some portions of the detailed descriptions which follow are presented in terms of procedures, logic blocks, processing and other symbolic representations of operations on data bits within a computer memory.

These descriptions and representations are the means used by those skilled in the data processing arts to most effectively convey the substance of their work to others skilled in the art. In the present disclosure, a procedure, logic block, process, or the like, is conceived to be a self-consistent sequence of steps or instructions leading to a desired result. The steps are those requiring physical manipulations of physical quantities. Usually, although not necessarily, these quantities take the form of electrical or magnetic signals capable of being stored, transferred, combined, compared, and otherwise manipulated in a computer system. It should be borne in mind, however, that all of these and similar terms are to be associated with the appropriate physical quantities and are merely convenient labels applied to these quantities.

Unless specifically stated otherwise as apparent from the following discussions, it is appreciated that throughout the present application, discussions utilizing the terms such as "accessing," "receiving," "sending," "using," "selecting," "determining," "normalizing," "multiplying," "averaging," "monitoring," "comparing," "applying," "updating," "measuring," "deriving" or the like, refer to the actions and processes of a computer system, or similar electronic computing device, that manipulates and transforms data represented as physical (electronic) quantities within the computer system's registers and memories into other data similarly represented as physical quantities within the computer system memories or registers or other such information storage, transmission or display devices.

In the figures, a single block may be described as performing a function or functions; however, in actual practice, the function or functions performed by that block may be performed in a single component or across multiple components, and/or may be performed using hardware, using software, or using a combination of hardware and software. To clearly illustrate this interchangeability of hardware and software, various illustrative components, blocks, modules, circuits, and steps have been described below generally in terms of their functionality. Whether such functionality is implemented as hardware or software depends upon the particular application and design constraints imposed on the overall system. Skilled artisans may implement the described functionality in varying ways for each particular application, but such implementation decisions should not be interpreted as causing a departure from the scope of the present invention. Also, the example input devices may include components other than those shown, including well-known components such as a processor, memory and the like.

The techniques described herein may be implemented in hardware, software, firmware, or any combination thereof, unless specifically described as being implemented in a specific manner. Any features described as modules or components may also be implemented together in an integrated logic device or separately as discrete but interoperable logic devices. If implemented in software, the techniques may be realized at least in part by a non-transitory processor-readable storage medium including instructions that, when executed, perform one or more of the methods described above. The non-transitory processor-readable data storage medium may form part of a computer program product, which may include packaging materials.

The non-transitory processor-readable storage medium may comprise random access memory (RAM) such as synchronous dynamic random-access memory (SDRAM), read only memory (ROM), non-volatile random access memory (NVRAM), electrically erasable programmable read-only memory (EEPROM), FLASH memory, other known storage media, and the like. The techniques additionally, or alternatively, may be realized at least in part by a processor-readable communication medium that carries or communicates code in the form of instructions or data structures and that can be accessed, read, and/or executed by a computer or other processor.

The various illustrative logical blocks, modules, circuits and instructions described in connection with the embodiments disclosed herein may be executed by one or more processors (or a processing system). The term "processor," as used herein may refer to any general-purpose processor, special-purpose processor, conventional processor, controller, microcontroller, and/or state machine capable of executing scripts or instructions of one or more software programs stored in memory.

Aspects of the disclosure provide methods and systems for operating a USB controller. As used herein, the term "USB controller" refers to any controller configured to manage and virtually operate one or more USB devices coupled to the USB controller. In some aspects, the USB controller may be an electronic device such as a dongle or a thin client. Further, the USB controller may operate as a USB host device and a USB device (e.g., as a dual role device). The USB controller may include a driver that supports MA-USB.

In some embodiments, the USB controller may retrieve a plurality of descriptors from a plurality of USB devices (e.g., a mouse and a touchscreen display) coupled to the USB controller via one or more wired or wireless communication channels. Each of the plurality of descriptors is a data structure that includes information regarding a respective one of the plurality of USB devices. In some aspects, the USB controller may retrieve the plurality of descriptors by enumerating each of the plurality of USB devices. In some embodiments, the USB controller may modify (e.g., renumber) at least one descriptor of the plurality of descriptors and may generate a virtual USB device based at least in part on modifying the at least one descriptor. In some aspects, the virtual USB device may represent a composite USB device that includes each of the plurality of USB devices. In some embodiments, the USB controller may output an address associated with the virtual USB device to a computing device (e.g., a laptop or a PC) operating as a USB host device.

When a computing device operates as a USB host device and is directly connected to a hub to which a plurality of USB devices is attached, the computing device often enumerates the hub and each of the plurality of USB devices. However, when the computing device is directly connected to a USB controller (rather than the hub) to which a plurality of USB devices is attached, the computing device enumerates only the USB controller. Because enumerating only the USB controller is faster than enumerating both the hub and each of the plurality of USB devices, aspects of the present disclosure may reduce the time required for the computing device to begin managing transactions between the computing device and the plurality of USB devices (via the USB controller).

Further, in order for the computing device to communicate via the hub with the plurality of USB devices using MA-USB, additional software (such as a driver that supports MA-USB) must first be installed on the computing device. In the present implementations, where a computing device is directly connected to a USB controller that (i) includes a driver that supports MA-USB, and (ii) is coupled to, and in communication with, the plurality of USB devices using MA-USB, the computing device may communicate with the plurality of USB devices (via the USB controller) without needing to install any additional software.

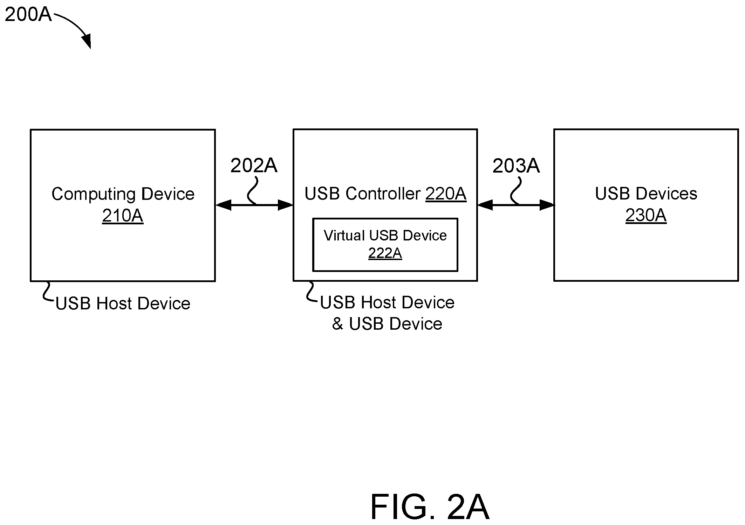

FIG. 2A shows an example electronic system 200A, in accordance with some embodiments. The system 200A may include a computing device 210A, a USB controller 220A, and one or more USB devices 230A (also referred to herein as "USB devices 230A). In some embodiments, the computing device 210A may be a laptop, PC, desktop, tablet, or other electronic device. As shown in FIG. 2A, the computing device 210A may be coupled to the USB controller 220A via a wired connection 202A (also referred to herein as the "connection 202A"). In some aspects, the computing device 210A may operate as a USB host device that is configured to supply power to, and initiate all communications with, the USB controller 220A, over the connection 202A, using USB hardware. In some aspects, the computing device 210A belongs to tier 1 of a first tiered-star topology (e.g., such as described with reference to FIG. 1).

In some embodiments, the USB controller 220A may be a dongle, a thin client, or other electronic device. In some embodiments, the USB controller 220A may operate as a USB device and a USB host device (e.g., as a dual role device). As a USB device, the USB controller 220A may be connected to, and communicate with, the computing device 210A via the connection 202A (e.g., a USB connection). As a USB host device, the USB controller 220A may be configured to supply power to, and initiate all communications with, the USB devices 230 over a wired or wireless connection 203A. In some embodiments, the USB controller 220A may be configured to virtually operate the USB devices 230A. For example, the USB controller 220A may be configured to communicate with and/or control, via abstraction, the USB devices 230A. In some aspects, the USB controller 220A belongs to tier 1 of a second tiered-star topology (such as described with reference to FIG. 1) that is different than the first tiered-star topology.

The USB devices 230A are coupled to the USB controller 220A via the connection 203A (e.g., a USB connection). The USB devices 230A may represent, for example, one or more hubs and/or one or more peripheral devices (e.g., a mouse, joystick, keyboard, webcam, flash key, microphone, touchscreen display, printer, and/or scanner). With reference for example to FIG. 1, at least one of the USB devices 230A must belong to tier 3 of the tiered-star topology 100, while the remaining USB devices 230A may belong to tier 3 or lowers tiers of the tiered-star topology 100 (e.g., tiers 4-7). Further, in some embodiments, one or more of the USB devices 230A may be configured to operate as a USB device and a USB host device (e.g., as a dual role device). During operation, the USB controller 220A may receive information (e.g., one or more descriptors) from the USB devices 230A. The USB controller 220A may use the received information to generate a virtual USB device 222A that includes, as an abstraction, each of the USB devices 230A. For example, the USB controller 220A may aggregate and/or modify the received information (e.g., one or more descriptors) to produce or define a set of descriptors for the virtual USB device 222A. Further, the USB controller 220A may present the virtual USB device 222A to the computing device 210A via the connection 202A. Accordingly, the computing device 210A may perceive each of the USB devices 230A as a single, aggregated USB device-that is, the virtual USB device 222A.

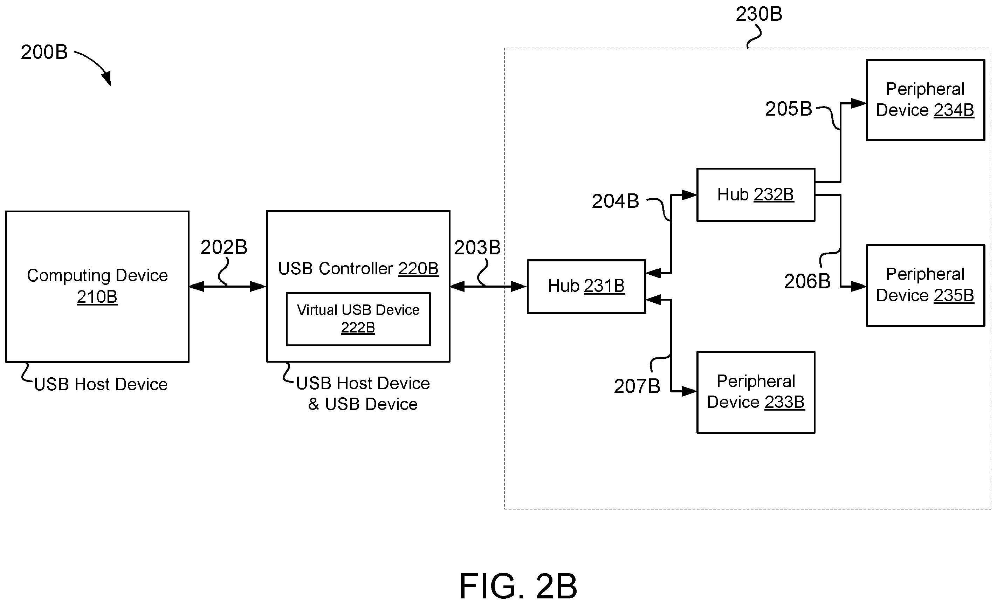

FIG. 2B shows an example electronic system 200B, in accordance with some embodiments. The electronic system 200B includes a computing device 210B, a USB controller 220B, and USB devices 230B. The computing device 210B is coupled to the USB controller 220B via a wired connection 202B (also referred to herein as the "connection 202B"), and the USB controller 220B is coupled to the USB devices 230B via a connection 203B. In some embodiments, the electronic system 200B may be one example of the electronic system 200A of FIG. 2A. With reference for example to FIG. 2A, the computing device 210B, the USB controller 220B, the USB devices 230B, the connection 202B, and the connection 203B may be examples of the computing device 210A, the USB controller 220A, the USB devices 230A, the connection 202A, and the connection 203A, respectively.

As shown in FIG. 2B, the USB devices 230B include hubs 231B and 232B, and peripheral devices 233B-235B. The peripheral devices 234B and 235B are coupled to the hub 232B via wired or wireless connections 205B and 206B, respectively. The hub 232B and the peripheral device 233B are coupled to the hub 231B via wired or wireless connections 204B and 207B, respectively. While FIG. 2B shows that the USB devices 230B include two hubs (e.g., 231B and 232B) and three peripheral devices (233B-235B), in some other embodiments, the USB devices 230B may include any number of hubs and any number of peripheral devices.

In some embodiments, one or more of the USB devices 230B and/or the USB controller 220B may represent a media agnostic USB (MA-USB) device, which is a device configured to communicate using MA-USB. An MA-USB device may be any device configured to communicate in accordance with the USB 2.0, 3.0 or 3.1 standard, over a non-USB connection such as, for example, a Wi-Fi, WiGig, or Ethernet connection.

During operation, the USB controller 220B may receive information (e.g., one or more descriptors from each of the USB devices 230B. The USB controller 220B may use the received information to generate a virtual USB device 222B that includes, as an abstraction, each of the USB devices 230B. For example, the USB controller 220B may aggregate and/or modify the received information to produce (or define) a set of descriptors for the virtual USB device 222B. Further, the USB controller 220B may present the virtual USB device 222B to the computing device 210B via the connection 202B. Accordingly, the computing device 210B may perceive each of the USB devices 230B as a single, aggregated USB device-that is, the virtual USB device 222B.

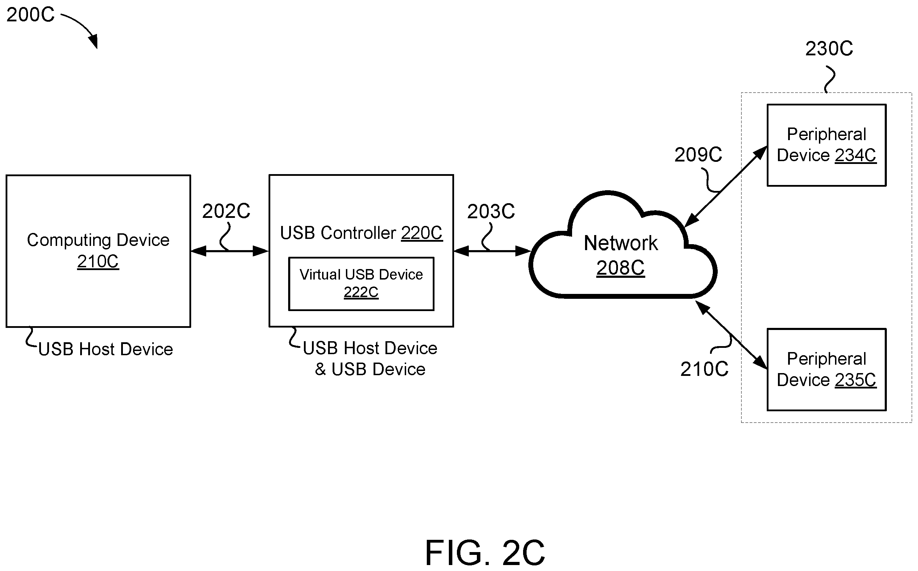

FIG. 2C shows an example electronic system 200C, in accordance with some embodiments. The electronic system 200C includes a computing device 210C, a USB controller 220C, a network 208C, and USB devices 230C. The computing device 210C is coupled to the USB controller 220C via a wired connection 202C (also referred to herein as the "connection 202C"), and the USB controller 220C is coupled to the network 208C via a connection 203C. In some embodiments, the electronic system 200C may be one example of any of the electronic systems 200A or 200B of FIGS. 2A and 2B, respectively. With reference for example to FIG. 2B, the computing device 210C, the USB controller 220C, the USB devices 230C, the connection 202C, and the connection 203C, may be embodiments of the computing device 210B, the USB controller 220B, the USB devices 230B, the connection 202B, and the connection 203B, respectively.

The network 208C may be, for example, a local area network (LAN), wide area network (WAN), the Internet, or a cloud network, that includes one or more wired and/or wireless communication links. In some embodiments, the network 208C may include one or more servers. As shown in FIG. 2C, the USB devices 230C may include peripheral devices 234C and 235C that are communicatively coupled to the network 208C via wired or wireless connections 209C and 210C, respectively.

During operation, the USB controller 220C may receive information (e.g., one or more descriptors) from each of the USB devices 230C via the network 208C and connections 203C, 209C, and 210C. The USB controller 220C may use the received information to generate a virtual USB device 222C that includes, as an abstraction, each of the USB devices 230C. For example, the USB controller 220C may aggregate and/or modify the received information to produce (or define) a set of descriptors for the virtual USB device 222C. Further, the USB controller 220C may present the virtual USB device 222C to the computing device 210C via the connection 202C. Accordingly, the computing device 210C may perceive each of the USB devices 230C as a single, aggregated USB device-that is, the virtual USB device 222C.

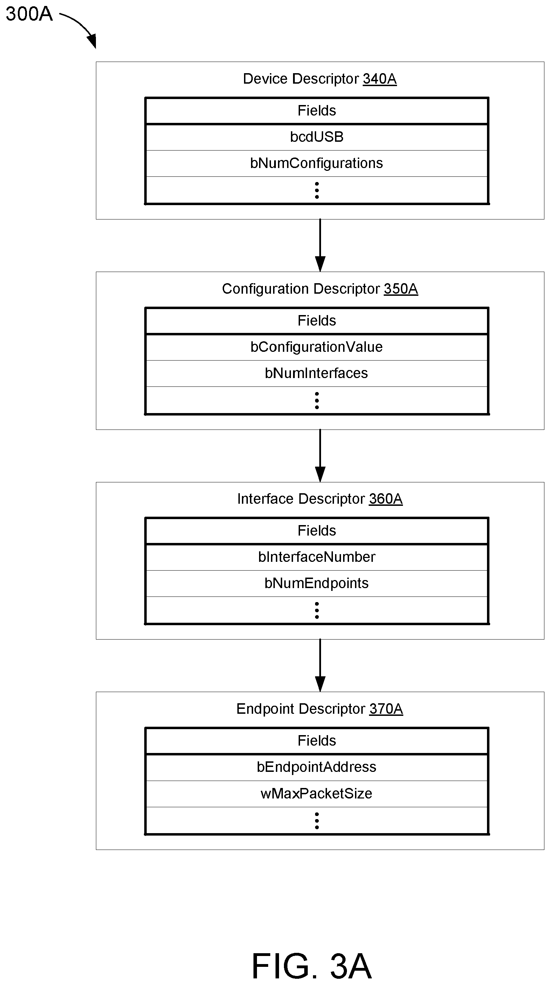

FIG. 3A shows an example set of descriptors 300A associated with a USB device, in accordance with some embodiments. The set of descriptors 300A includes a device descriptor 340A, a configuration descriptor 350A, an interface descriptor 360A, and an endpoint descriptor 370A. In some aspects, each descriptor of the set of descriptors 300A is a data structure having various fields that carry data (e.g., information or attributes) associated with the USB device. Further, each descriptor of the set of descriptors 300A may be included (or stored) in the USB device (e.g., one of the USB devices 230A or the USB controller 220A, of FIG. 2A).

As shown in FIG. 3A, the set of descriptors 300A is structured as a hierarchy, with the device descriptor 340A at the highest level, the configuration descriptor 350A at the second-highest level, the interface descriptor 360A at the third-highest level, and the endpoint descriptor 370A at the fourth-highest level (or the lowest level). In some aspects, the device descriptor 340A may include general information about the USB device, while the configuration descriptor 350A, the interface descriptor 360A, and the endpoint descriptor 370A may, in succession, include increasingly more detailed information about the USB device.

In some aspects, the device descriptor 340A carries information about the USB device as a whole. For example, as shown in FIG. 3A, the device descriptor 340A may include a "bcdUSB" field, which indicates a USB standard to which the USB device conforms. The device descriptor 340A may also include a "bNumConfigurations" field, which indicates the total number of configurations (or configuration descriptors) associated with the USB device. Each configuration refers to one or more "interfaces" of the USB device, where an interface is a group of endpoints (e.g., buffers) in the USB device that are used to perform a function or feature. While not shown in FIG. 3A, the device descriptor 340A may include other information (such as fields for providing a class code and the size of the device descriptor 340A).

The configuration descriptor 350A carries information about a respective configuration of the USB device. As shown in FIG. 3A, the configuration descriptor 350A may include a "bConfigurationValue" field, which identifies the respective configuration. The configuration descriptor 350A may also include a "bNumInterfaces" field, which indicates the total number of interfaces included in the respective configuration. While not shown in FIG. 3A, the configuration descriptor 350A may also include other information (such as fields for providing power characteristics associated with the respective configuration). In some embodiments, the set of descriptors 300A may include more than one configuration descriptor.

The interface descriptor 360A carries information about a respective interface of the configuration referenced in the configuration descriptor 350A. With reference to FIG. 3A, the interface descriptor 360A may include a "bInterfaceNumber" field, which identifies the respective interface (also referred to herein as an "interface number"). The interface descriptor 360A may also include a "bNumEndpoints" field, which indicates the total number of endpoints (or buffers) included in the respective interface. Further, the interface descriptor 360A may include other information not shown in FIG. 3A (such as fields for providing a class code, the size of the interface descriptor 360A). In some embodiments, the set of descriptors 300A may include multiple interface descriptors.

The endpoint descriptor 370A carries information about a respective endpoint of the interface referenced in the interface descriptor 360A. In some aspects, the endpoint may be one of up to 32 endpoints included in the USB device. Further, the endpoint may be used by the USB device to either transfer data to, or receive data from, a USB host device. As shown in FIG. 3A, the endpoint descriptor 370A may include a "bEndpointAddress" field, which indicates an address of the respective endpoint. In some aspects, the address may include a number identifying the respective endpoint (also referred to herein as an "endpoint number"). Further, the address may indicate whether the endpoint is configured to transfer data to, or receive data from, a USB host device. As shown in FIG. 3A, the endpoint descriptor 370A may also include a "wMaxPacketSize" field, which indicates the maximum packet size that the respective endpoint is capable of transmitting or receiving. Further, the endpoint descriptor 370A may include other information not shown in FIG. 3A (such as fields which indicate the type of data transfer (e.g., a control, isochronous, bulk, or interrupt transfer) the respective endpoint is configured to facilitate). In some embodiments, the set of descriptors 300A may include multiple endpoint descriptors.

During operation, when a USB host device (e.g., a USB controller) is coupled to one or more USB devices, the USB host device may enumerate each of the one or more USB devices in order to identify and load one or more drivers, which enable the USB host device to operate the one or more USB devices. For example, when a USB controller (e.g., the USB controller 220A of FIG. 2A) is coupled to a USB device (e.g., one of the USB devices 230A of FIG. 2A), the USB controller may detect the USB device and retrieve a device descriptor (e.g., the device descriptor 340A) from the USB device. The USB controller may use the retrieved device descriptor to determine a USB standard to which the USB device conforms, and the total number of configurations supported by the USB device. The USB controller may also retrieve each of one or more configuration descriptors stored in the USB device.

In some embodiments, when the USB controller retrieves a respective one of the one or more configuration descriptors (e.g., the configuration descriptor 350A) from the USB device, the USB controller may also retrieve, from the USB device, one or more interface descriptors (e.g., the interface descriptor 360A), and one or more endpoint descriptors (e.g., the endpoint descriptor 370A), associated with the configuration referenced in the respective configuration descriptor. Further, in some embodiments, the USB controller may use, and/or modify, one or more of the retrieved device descriptor, configuration descriptor(s), interface descriptor(s), and endpoint descriptor(s) to generate a virtual USB device that includes, as an abstraction, the USB device. For example, the USB controller may aggregate, combine, and/or modify one or more of the retrieved device descriptor, configuration descriptor(s), interface descriptor(s), and endpoint descriptor(s) to produce (or define) a set of descriptors for the virtual USB device. In some embodiments, the USB controller may further use the one or more of the retrieved device descriptor, configuration descriptor(s), interface descriptor(s), and endpoint descriptor(s) to identify and load a driver, which the USB controller may use to operate the virtual USB device. In embodiments where the USB controller is coupled to multiple USB devices, the USB controller may enumerate each the USB devices coupled to the USB controller and generate a virtual USB device that includes each of the USB devices, as described above.

In some embodiments, the set of descriptors 300A may include one or more other descriptors (e.g., string descriptors or interface association descriptors) not shown in FIG. 3A. For example, in embodiments where the set of descriptors 300A is included in, or associated with, a composite USB device (e.g., a USB device that includes a keyboard and a trackpad, or a virtual composite USB device), the set of descriptors 300A may include a respective interface association descriptor for each function of the composite USB device. In such embodiments, each interface association descriptor may include attributes of one or more interfaces used to perform a respective function of the composite USB device.

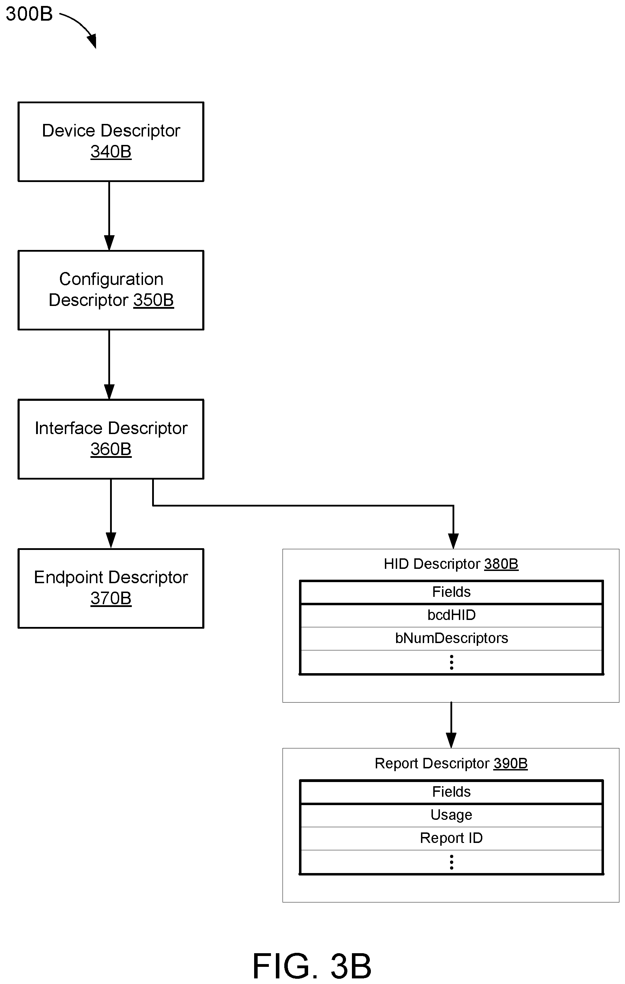

FIG. 3B shows an example set of descriptors 300B associated with a USB human interface device ("HID"), in accordance with some embodiments. An HID is a class of USB device (with class code 03h) that is often used by a human to control the operation of a computing system. Example HIDs include keyboards, mice, trackballs, or joysticks. As shown in FIG. 3B, the set of descriptors 300B includes a device descriptor 340B, a configuration descriptor 350B, an interface descriptor 360B, an endpoint descriptor 370B, an HID report descriptor 380B, and a report descriptor 390B. In some embodiments, the set of descriptors 300B may be one example of the set of descriptors 300A of FIG. 3A. With reference for example to FIG. 3A, the device descriptor 340B, the configuration descriptor 350B, the interface descriptor 360B, and the endpoint descriptor 370B may be examples of the device descriptor 340A, the configuration descriptor 350A, the interface descriptor 360A, and the endpoint descriptor 370A, respectively. In some aspects, the class code, 03h, of the HID may be provided in the interface descriptor 360B.

As shown in FIG. 3B, the set of descriptors 300B is structured as a hierarchy. Within the hierarchy, the device descriptor 340B resides at the highest level, the configuration descriptor 350B at the second-highest level, the interface descriptor 360 at the third-highest level, the endpoint descriptor 370B and the HID report descriptor 380B at the fourth-highest level, and the report descriptor 390B at the fifth-highest level (or the lowest level). In some aspects, the HID report descriptor 380B and the report descriptor 390B are descriptors that are specific to (or only included in or associated with) HIDs. By contrast, the other descriptors in the set of descriptors 300B are standard descriptors that may be included in (or associated with) USB devices, regardless of class.

The HID report descriptor 380B carries information about data (e.g., data packets) that may be transferred between the HID and a USB host device. The HID report descriptor 380B also carries information about a configuration specified in the configuration descriptor 350B. As shown in FIG. 3B, the HID report descriptor 380B may include a "bcdHID" field, which indicates a USB HID standard to which the HID conforms. The HID report descriptor 380B may also include a "bNumDescriptors" field, which indicates the number of additional HID-specific descriptors (e.g., report descriptors) for the configuration specified in the configuration descriptor 350B. In some aspects, the HID report descriptor 380B may include other information regarding the transfer of data between the HID and a USB host device, for the specified configuration.

The report descriptor 390B carries information about the respective structure of one or more reports that may be transmitted from the HID to a USB host device, or from the USB host device to the HID. A report is a fixed-size data packet. The report descriptor 390B may carry information about how a respective report should be processed or used by the USB host device. As shown in FIG. 3B, the report descriptor 390B may include a "usage" field, which identifies data in a report that pertains to a respective control of the HID (e.g., the left button of a mouse). The report descriptor 390B may also include a "Report ID" field, which identifies a respective report. As used herein, the term "Report ID" (or "report ID") may refer to a Report ID field or a value (e.g., a number) carried in the Report ID field. In some other embodiments, the report descriptor 390B may include other information regarding one or more reports that may be exchanged between the HID and a USB host device, for a specified configuration.

In some embodiments, the set of descriptors 300B may be included in (or associated with) a composite HID. A composite HID may be any HID that includes (or supports) multiple HID functions. For example, an HID that includes both a keyboard and a trackpad is a composite HID because the HID supports multiple functions, including, for example, (i) receiving user input via depressed buttons on the keyboard and (ii) receiving user input via detecting a finger or stylus in contact with the trackpad. As another example, a virtual USB device (e.g., the virtual USB device 222A of FIG. 2A) that includes, as an abstraction, multiple HIDs, is a composite HID. In some embodiments, when the set of descriptors 300B is included in, or associated with, a composite HID, the set of descriptors 300B may include an HID report descriptor (e.g., the HID report descriptor 380B) that refers to only a single report descriptor (e.g., the report descriptor 390B). In such embodiments, the report descriptor may include one or more report identifier ("ID") fields having values that are sequentially numbered (e.g., a first report ID field has a value equal to 1, a second report ID field has a value equal to 2, a third report ID field has a value equal to 3, and so forth).

During operation, when a USB host device, such as a USB controller, is coupled to one or more HIDs (and/or other USB devices), the USB controller may enumerate each of the one or more HIDs (and/or other USB devices) coupled to the USB controller. For example, the USB controller may detect each of the one or more HIDs and retrieve a set of descriptors (e.g., the set of descriptors 300B) from each of the one or more HIDs. The USB controller may further use the retrieved set(s) of descriptors in order to generate a virtual USB device that includes, as an abstraction, the one or more HIDs. That is, the USB controller may use, aggregate (or combine), and/or modify one or more descriptors of the retrieved set(s) of descriptors to generate or define a set of descriptors for the virtual USB device. The USB controller may further use the retrieved set(s) of descriptors to identify and load one or more drivers, which the USB controller may use to operate the virtual USB device.

In some embodiments, a USB controller may generate a virtual USB device by aggregating or combining device descriptors retrieved (during enumeration) from each of one or more USB devices coupled to the USB controller. More specifically, the USB controller may produce a new device descriptor that collectively describes each of the one or more USB devices coupled to the USB controller. In some embodiments, the USB controller may store the new (or modified or generated) device descriptor in a set of descriptors associated with the virtual USB device. In some aspects, the set of descriptors associated with the virtual USB device may be a hierarchy of descriptors, where the new (or modified or generated) device descriptor resides at the highest level of the hierarchy (as shown, for example, in FIGS. 3A and 3B).

In some embodiments, the set of descriptors associated with the virtual USB device may also include, at the second-highest level of the hierarchy (as shown, for example, in FIGS. 3A and 3B), one or more configuration descriptors retrieved (during enumeration) from the one or more USB devices. In some embodiments, the USB controller may aggregate or combine configuration descriptors retrieved, during enumeration, from at least two USB devices coupled to the USB controller. More specifically, the USB controller may produce a new configuration descriptor that collectively describes each of the USB devices from which the aggregated or combined configuration descriptors were retrieved. The USB controller also may include the new (or modified or generated) configuration descriptor in the set of descriptors associated with the virtual USB device, at the second-highest level of the hierarchy.

In some embodiments, the set of descriptors associated with the virtual USB device may also include, at the third-highest level of the hierarchy (as shown, for example, in FIGS. 3A and 3B), one or more interface descriptors retrieved (during enumeration) from one or more USB devices coupled to the USB controller. In some embodiments, the USB controller may modify one or more of the retrieved interface descriptors. For example, the USB controller may modify the value of an interface number field contained in each of the retrieved interface descriptors so that the values of the interface number fields are sequential (e.g., a first interface number field has a value equal to 1, a second interface number field has a value equal to 2, a third interface number field has a value equal to 3, and so forth) for a respective configuration. The USB controller may further store the modified (or generated) interface descriptors in the set of descriptors associated with the virtual USB device, at the third-highest level of the hierarchy.

In some embodiments, the set of descriptors associated with the virtual USB device may also include, at the fourth-highest level of the hierarchy (as shown, for example, in FIGS. 3A and 3B), one or more endpoint descriptors retrieved (during enumeration) from the one or more USB devices. In some embodiments, the USB controller may modify one or more of the retrieved endpoint descriptors. For example, the USB controller may modify the address provided in each retrieved endpoint descriptor, such that the address uniquely identifies an endpoint described in a respective endpoint descriptor, and such that the endpoint numbers of the endpoint descriptors for a respective configuration are sequential. The USB controller may further store the modified (or generated) one or more endpoint descriptors in the set of descriptors associated with the virtual USB device, at the fourth-highest level of the hierarchy.

In embodiments where the USB controller is coupled to one or more HIDs, during enumeration, the USB controller may retrieve at least one HID report descriptor from each of the one or more HIDs. In some embodiments, the USB controller may aggregate (or combine) the retrieved HID report descriptors to produce a new HID report descriptor that describes how data may be transferred between the USB controller and each of the one or more HIDs for a respective configuration. The USB controller may further store the modified (or generated) HID report descriptor in the respective set of descriptors associated with the virtual USB device, for the respective configuration, at the fourth-highest level of the hierarchy (as shown, for example, in FIG. 3B). The USB controller also may retrieve at least one report descriptor from each of the one or more HIDs during enumeration. In some embodiments, the USB controller may aggregate (or combine) and/or modify the retrieved report descriptors to produce a new report descriptor that includes a Report ID field for each of the reports of the one or more HIDs, where the Report ID fields include values that are sequentially numbered (e.g., a first Report ID field has a value of 1, a second Report ID field has a value of 2, a third report Report ID field has a value of 3, and so forth), for a respective configuration. The USB controller may further store the new (or modified or generated report descriptor in the set of descriptors associated with the virtual USB device, for a respective configuration, at the fifth-highest level of the hierarchy (as shown, for example, in FIG. 3B).

In some embodiments, the USB controller may generate at least one interface association descriptor using descriptors retrieved (during enumeration) from multiple USB devices coupled to the USB controller, for inclusion in the set of descriptors associated with the virtual USB device. In some aspects, each generated interface association descriptor is a descriptor that associates two or more interface descriptors included in the set of descriptors associated with the virtual USB device. Further, the USB controller may generate (or produce) each interface association descriptor by, for example, aggregating or combining interface descriptors retrieved from the multiple USB devices.

In some aspects, once the USB controller has generated each descriptor in the set of descriptors for the virtual USB device, the virtual USB device is fully synthesized. As a result, the virtual USB device includes, as an abstraction, each of the one or more USB devices coupled to the USB controller.

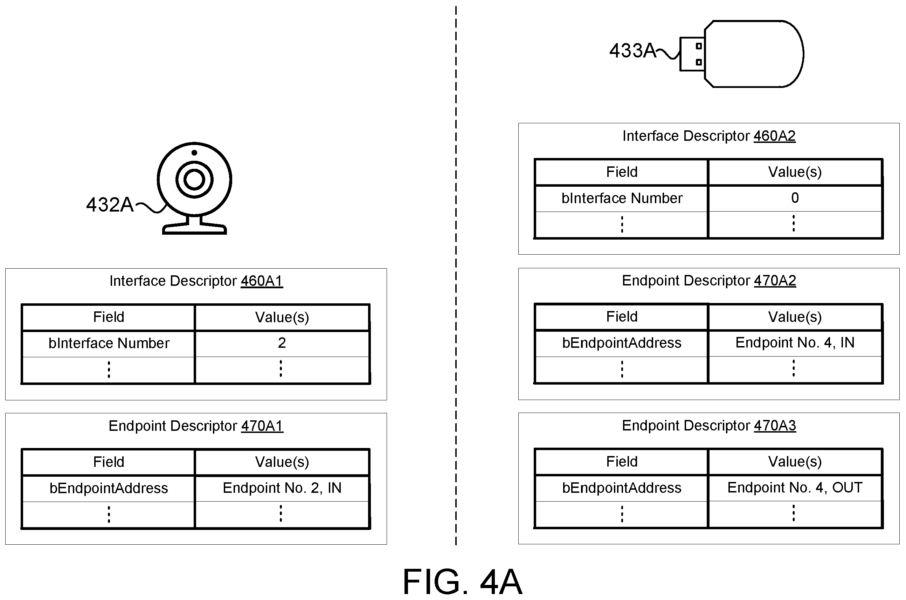

FIG. 4A shows example descriptors associated with a first USB device 432A and a second USB device 433A, in accordance with some embodiments. In the example of FIG. 4A, the first USB device 432A is depicted as a webcam and the second USB device 433A is depicted as a flash key. However, in actual implementations, the USB devices 432A and 433A may be any USB devices having USB connectivity. As shown in FIG. 4A, the first USB device 432A is associated with (e.g., includes) an interface descriptor 460A1 and an endpoint descriptor 470A1, and the second USB device 433A is associated with (e.g., includes) an interface descriptor 460A2 and endpoint descriptors 470A2 and 470A3. In some embodiments, each of the interface descriptors 460A1 and 460A2 may be one example of the interface descriptor 360A of FIG. 3A, and each of the endpoint descriptors 470A1-470A3 may be one example of the endpoint descriptor 370A of FIG. 3A. Further each of the first USB device 432A and the second USB device 433A may be one example of any of the USB devices 230A of FIG. 2A. In some aspects, each of the first and second USB devices 432A and 433A, respectively, may be associated with (e.g., include) other descriptors (e.g., a device descriptor and at least one configuration descriptor), which are not shown in FIG. 4A.

As shown in FIG. 4A, and with respect to the first USB device 432A, the interface descriptor 460A1 includes an interface number of 2. The endpoint descriptor 470A1 includes an address that indicates an endpoint number of 2. The address also indicates that the endpoint described by the endpoint descriptor 470A1 is configured to output data to a USB host device (where "IN" in the endpoint descriptor 470A1 of FIG. 4A denotes the direction of the data from the perspective of the USB host device).

With respect to the second USB device 433A, the interface descriptor 460A2 includes an interface number equal to 0. The endpoint descriptor 470A2 includes an address that indicates an endpoint number equal to 4. The address also indicates that the endpoint described by the endpoint descriptor 470A2 is configured to output data to a USB host device (where "IN" in the endpoint descriptor 470A2 of FIG. 4A denotes the direction of the data from the perspective of the USB host device, as explained above). The endpoint descriptor 470A3 includes an address that indicates (i) an endpoint number equal to 4, and (ii) that the endpoint described by the endpoint descriptor 470A3 is configured to receive data from a USB host device (where "OUT" in the endpoint descriptor 470A3 of FIG. 4A denotes the direction of the data from the perspective of the USB host device).

In some embodiments, when the first USB device 432A and the second USB device 433A are coupled to a USB host device (e.g., a USB controller), the USB host device may enumerate each of the first USB device 432A and the second USB device 433A. During the enumeration, the USB host device may retrieve the interface descriptor 460A1 and the endpoint descriptor 470A1 from the first USB device 432A. The USB host device may also retrieve the interface descriptor 460A2 and the endpoint descriptors 470A2 and 470A3 from the second USB device 433A. In some embodiments, the USB host device may use (e.g., modify or renumber) the retrieved descriptors 460A1, 470A1, 460A2, 470A2, and 470A3 to generate new descriptors for inclusion in a set of descriptors associated with a virtual USB device.

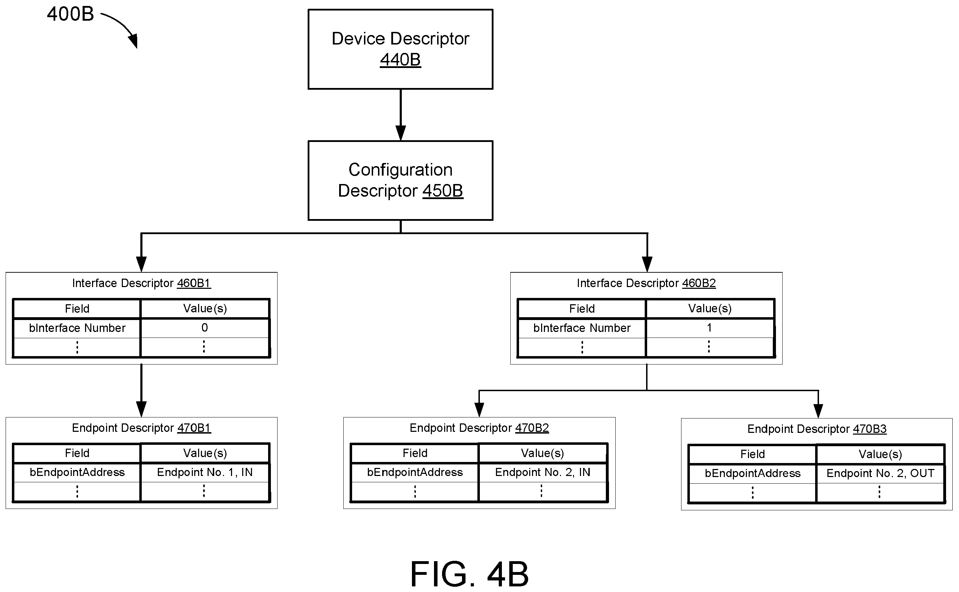

FIG. 4B shows an example set of descriptors 400B associated with a virtual USB device generated based on descriptors of the first USB device 432A and the second USB device 433A of FIG. 4A. As shown in FIG. 4B, the set of descriptors 400B includes a device descriptor 440B, a configuration descriptor 450B, interface descriptors 460B1 and 460B2, and endpoint descriptors 470B1-470B3. In some embodiments, the device descriptor 440B and the configuration descriptor 450B may be examples of the device descriptor 340A and the configuration descriptor 350A, respectively of FIG. 3A, each of the interface descriptors 460B1 and 460B2 may be one example of the interface descriptor 360A, and each of the endpoint descriptors 470B1-470B3 may be one example of the endpoint descriptor 370A. In some aspects, a USB host device (e.g., a USB controller) may generate the set of descriptors 400B associated with the virtual USB device.

In some embodiments, the USB host device may generate the device descriptor 440B by aggregating or combining device descriptors retrieved (during enumeration) from the first USB device 432A and the second USB device 433A. The USB host device may generate the configuration descriptor 450B by aggregating or combining configuration descriptors retrieved (during enumeration) from the first USB device 432A and the second USB device 433A. The USB host device may generate the interface descriptor 460B1 based on the interface descriptor 460A1 (of FIG. 4A). That is, the USB host device may modify the interface number of the interface descriptor 460A1 from a value equal to 2 to a value equal to 0, as shown in FIG. 4B. Similarly, the USB host device may generate the endpoint descriptor 470B1 based on the endpoint descriptor 470A1 (of FIG. 4A). More specifically, the USB host device may modify the endpoint number of the endpoint descriptor 470A1 from a value equal to 2 to a value equal to 1, as shown in FIG. 4B. The USB host device may further generate the interface descriptor 460B2 based on the interface descriptor 460A2 (of FIG. 4A). That is, the USB host device may modify the interface number of the interface descriptor 460A2 from a value of 0 to a value of 1, in order to generate the interface descriptor 460B2. The USB host device may also generate the endpoint descriptors 470B2 and 470B3 based on the endpoint descriptors 470A2 and 470A3, respectively (of FIG. 4A). More specifically, the USB host device may modify the endpoint number of the endpoint descriptor 470A2 from a value of 4 to a value of 2, in order to generate the endpoint descriptor 470B2. The USB host device may also modify the endpoint number of the endpoint descriptor 470A3 from a value of 4 to a value of 2, in order to generate the endpoint descriptor 470B3. As shown in FIG. 4B, the interface descriptors 460B1 and 460B2 include sequential interface numbers (e.g., the interface number field of the interface descriptor 460B1 has a value equal to 0, and interface number field of the interface descriptor 460B2 has a value equal to 1). Further, the endpoint number of 1 of the endpoint descriptor 470B1 and the endpoint number of 2 of both the endpoint descriptors 470B2 and 470B3 are sequential.

In some embodiments, where an additional USB device (e.g., a printer), is coupled to the USB host device, the USB host device may enumerate the printer. During the enumeration, the USB host device may retrieve a set of descriptors that includes an interface descriptor and an endpoint descriptor, among other descriptors, from the printer. The USB host device may modify the retrieved interface number of the interface descriptor to have a value equal to 2, and add the modified interface descriptor (not shown in FIG. 4B) to the set of descriptors 400B for the virtual USB device. The USB host device may also modify the configuration descriptor 450B to describe the newly added interface descriptor. Further, the USB host device may modify the retrieved endpoint number of the endpoint descriptor to have a value equal to 3, and add the modified endpoint descriptor (not shown in FIG. 4B) to the set of descriptors 400B. Subsequently, if the second USB device 433A is decoupled from the USB host device, the USB host device may enumerate (once again) the first USB device 432A and the printer. During the enumeration, the USB host device may retrieve descriptors from the first USB device 432A and the printer and aggregate (or combine), and/or modify the retrieved descriptors to generate a new set of descriptors associated with a new virtual USB device (such as described with reference to FIG. 4B).

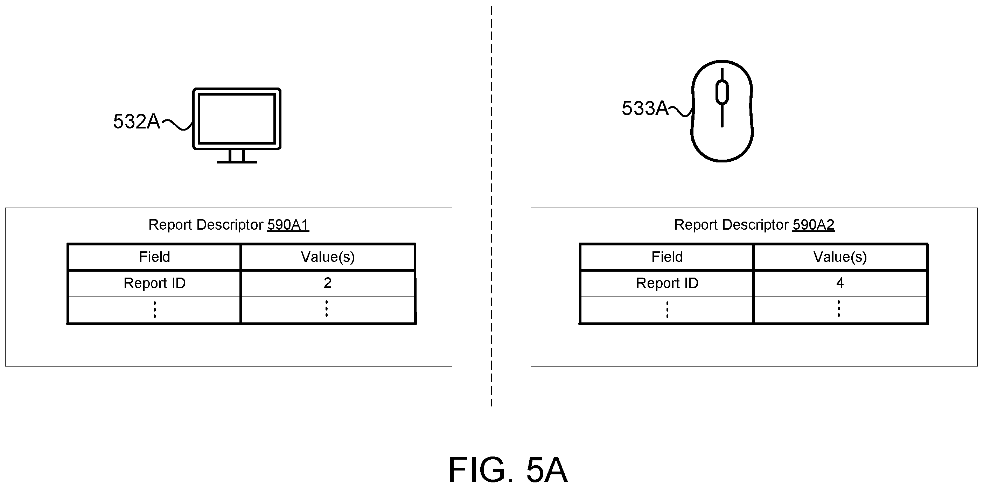

FIG. 5A shows example descriptors associated with a first HID 532A and a second HID 533A, in accordance with some embodiments. In the example of FIG. 5A, the first HID 532A is depicted as a touchscreen display and the second HID 533A is depicted as a mouse. However, in actual implementations, the first and second HIDs 532A and 533A, respectively, may be any HIDs having USB connectivity. As shown in FIG. 5A, the first HID 532A is associated with (e.g., includes) a report descriptor 590A1, and the second HID is associated with (e.g., includes) a report descriptor 590A2. In some embodiments, each of the report descriptors 590A1 and 590A2 may be one example of the report descriptor 390B of FIG. 3B, and each of the first HID 532A and the second HID 533A may be one example of any of the USB devices 230A of FIG. 2A. As shown in FIG. 5A, the report descriptor 590A1 for the first HID 532A includes a Report ID field having a value equal to 2, and the report descriptor 590A2 for the mouse 533A includes a Report ID field having a value equal to 4. In some aspects, each of the first HID 532A and the second HID 533A may include other descriptors (e.g., a device descriptor, configuration descriptor(s), interface descriptor(s), endpoint descriptor(s), a HID report descriptor(s), and one or more additional report descriptors), which are not shown in FIG. 5A.

In some embodiments, when the first HID 532A and the second HID 533A are coupled to a USB host device (e.g., a USB controller), the USB host device may enumerate each of the first HID 532A and the second HID 533A. During the enumeration, the USB host device may retrieve the report descriptors 590A1 and 590A2 from the first HID 532A and the second HID 533A, respectively. In some embodiments, the USB host device may aggregate or combine the retrieved descriptors to generate a new report descriptor for inclusion in a set of descriptors associated with a virtual USB device (such as described with reference to FIG. 3B).

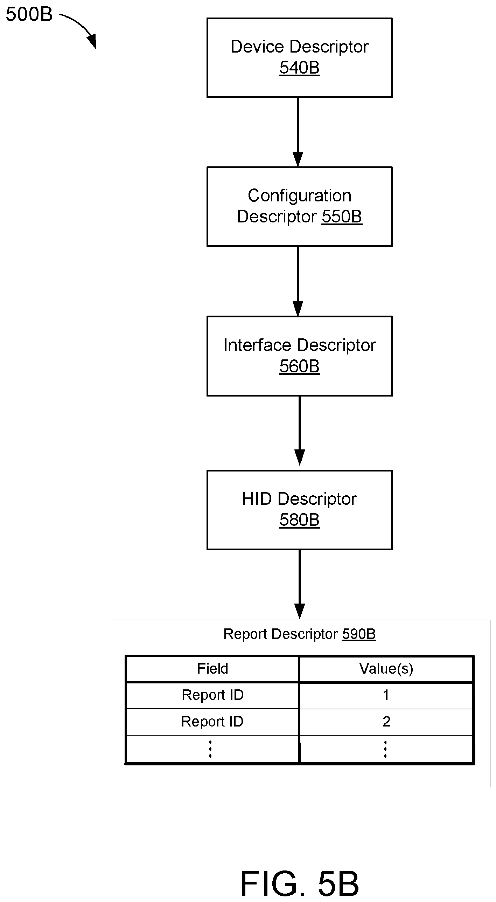

FIG. 5B shows an example set of descriptors 500B associated with a virtual USB device generated based on descriptors of the first HID 532A and the second HID 533A of FIG. 5A. In some embodiments, the set of descriptors 500B may be one example of the set of descriptors 300B of FIG. 3B. As shown in FIG. 5B, the set of descriptors 500B includes a device descriptor 540B, a configuration descriptor 550B, an interface descriptor 560B, a HID report descriptor 580B, and a report descriptor 590B. In some aspects, a USB host device (e.g., a USB controller) may generate the set of descriptors 500B associated with the virtual USB device.

In some embodiments, the USB host device may generate the device descriptor 540B by aggregating or combining device descriptors retrieved (during enumeration) from the first HID 532A and the second HID 533A. The USB host device may generate the configuration descriptor 550B by aggregating or combining configuration descriptors, retrieved (during enumeration) from the first HID 532A and the second HID 533A. The USB host device may generate the interface descriptor 560B by aggregating or combining interface descriptors, retrieved (during enumeration) from the first HID 532A and the second HID 533A. Further, the USB host device may generate the HID report descriptor 580B by aggregating or combining HID report descriptors retrieved (during enumeration) from the first HID 532A or the second HID 533A. In some aspects, the USB host device may generate the report descriptor 390B based on the report descriptors 590A1 and 590A2 (of FIG. 5A) retrieved (during enumeration) from the first HID 532A and the second HID 533A, respectively. That is, the USB host device may modify the Report ID field of the report descriptor 590A1 to have a value equal to 1 (rather than 2) when adding such Report ID field to the report descriptor 590B. The USB host device may also modify the Report ID field of the report descriptor 590A2 to have a value equal to 2 when adding such Report ID field to the report descriptor 590B. As shown in FIG. 5B, the values of the Report ID fields in the report descriptor 590B are sequential (e.g., the first Report ID field has a value equal to 1, and the second Report ID field has a value equal to 2). In some aspects, because the report descriptor 590B describes reports for multiple HIDs, the report descriptor 590B represents an aggregated report descriptor.

In some embodiments, where an additional HID (e.g., a joystick), is coupled to the USB host device, the USB host device may enumerate the joystick. During the enumeration, the USB host device may retrieve a set of descriptors including a report descriptor (among other descriptors) from the joystick. The USB host device may further modify a Report ID field of the retrieved report descriptor to have a value equal to 3, and add the modified Report ID field (not shown in FIG. 5B) to the report descriptor 590B. Subsequently, if the second HID 533A is decoupled from the USB host device, the USB host device may enumerate (once again) the first HID 532A and the joystick, and use, aggregate (or combine) and/or modify descriptors retrieved from the first HID 532A and the joystick during the enumeration to generate a new set of descriptors associated with a new virtual USB device (such as described with reference to FIG. 5B).

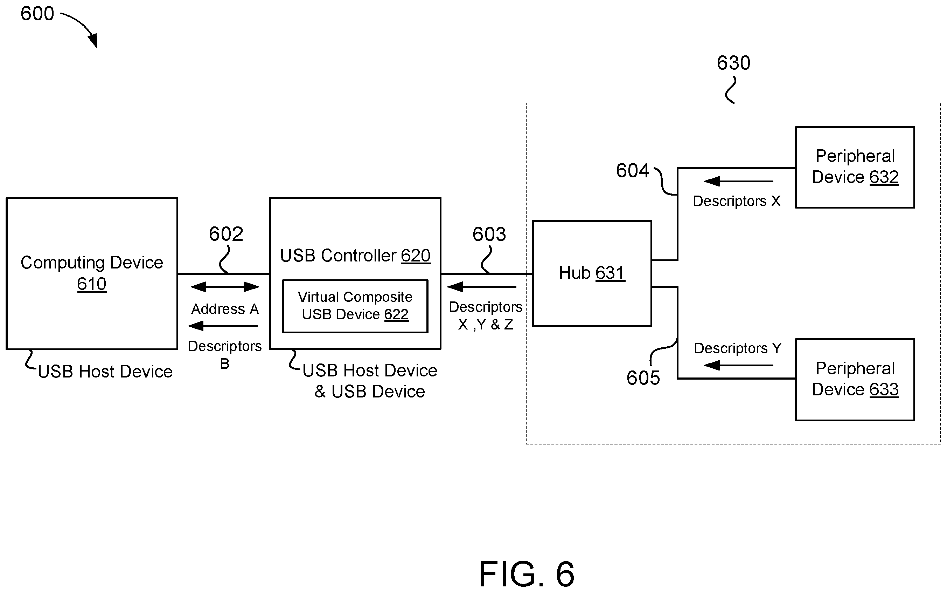

FIG. 6 shows an example electronic system 600, in accordance with some embodiments. The electronic system 600 includes a computing device 610, a USB controller 620, and USB devices 630. In the example of FIG. 6, the computing device 610 may operate as a USB host device coupled to the USB controller 620 via a wired connection 602 (also referred to as the "connection 602"), and the USB controller 620 may operate as a USB host device and as a USB device (or as a dual role device) coupled to the USB devices 630 via a connection 603. In some embodiments, the computing device 610, the USB controller 620, the USB devices 630, the connection 602, and the connection 603 may be examples of the computing device 210A, the USB controller 220A, the USB devices 230A, the connection 202A, and the connection 203A, respectively, of FIG. 2A.

As shown in FIG. 6, the USB devices 630 may include a hub 631 and peripheral devices 632 and 633. The peripheral devices 632 and 633 may be coupled to the hub 631 via wired or wireless connections 604 and 605, respectively. While FIG. 6 shows that the USB devices 630 include one hub (the hub 631) and two peripheral devices (632 and 633), in some embodiments, the USB devices 630 may include any number of hubs and any number of peripheral devices.

During operation, the USB controller 620 may enumerate each of the USB devices 630. During the enumeration, the USB controller 620 may receive (i) a set of descriptors Z from the hub 631 via the connection 603, (ii) a set of descriptors X from the peripheral device 632 via the connections 603 and 604, and (iii) a set of descriptors Y from the peripheral device 633 via the connections 603 and 605. In some embodiments, the USB controller 620 may use, aggregate (or combine), or modify descriptor(s) of the received sets of descriptors X, Y, and Z (as described above with respect to FIGS. 3B-5B), to generate a set of descriptors B associated with a virtual composite USB device 622. In some aspects, when the USB controller 620 has completed generating the set of descriptors B for the virtual composite USB device 622, the virtual composite device 622 is fully synthesized, and included (or stored in) the USB controller 620. In some aspects, the virtual composite USB device 622 may be one example of the virtual USB device 222A of FIG. 2A. Further, the virtual composite device 622 includes, as an abstraction, each of the USB devices 630. The USB controller 620 may virtually operate (e.g., control access to) each of the USB devices 630 via the virtual composite USB device 622.

In some embodiments, the computing device 610 may enumerate the virtual composite USB device 622 (or the USB controller 620). During the enumeration, the computing device 610 may retrieve the set of descriptors B (e.g., which may be one example of the set of descriptors 400B or 500B of FIGS. 4B and 5B, respectively), associated with the virtual composite USB device 622, from the USB controller 620. The computing device 610 may use the retrieved set of descriptors to identify and load one or more USB device drivers (e.g., standard USB device drivers) from the operating system of the USB host device, where the one or more device drivers enable the computing device 610 to communicate with the virtual composite USB device 622 (or one or more of the USB devices 630 via the virtual composite USB device 622). In some embodiments, during the enumeration, the computing device 610 may assign an address A to the virtual composite USB device 622.

In some aspects, the virtual composite USB device 622 may communicate with the computing device 610 on behalf of the USB controller 620 and/or one or more of the USB devices 630. For example, the computing device 610 may communicate with the virtual composite USB device 622 (e.g., to communicate with one or more of the USB devices 630) by providing the address A in one or more data packets sent to the virtual composite USB device 622 (via the connection 602). The virtual composite USB device 622 may relay data (and/or other information) abstracted from the peripheral device 632 associated with the address A to the computing device 610 by including such data in one or more data packets sent to the computing device 610 (via the connection 602).

Because the virtual composite USB device 622 may communicate with the computing device 610 using a single address (e.g., address A) in one or more data packets, the virtual composite USB device 622 may appear as a single device to the computing device 610. For example, in some embodiments, the computing device 610 may display a device manager (e.g., a graphical user interface (GUI)) on a display screen, where the virtual composite USB device 622 may appear as a single icon or line item in the GUI. In some embodiments, the device manager may be configured to provide more detailed information about the virtual composite USB device 622. For example, the device manager may display not only an indication of the virtual composite USB device 622, but also an indication of the one or more USB devices (excluding any hubs) coupled to the USB controller 620 (e.g., the peripheral device 632 and/or the peripheral device 633, but not the hub 631). The device manager may also be configured to indicate a speed of the virtual composite USB device 622. In some embodiments, the speed displayed by the device manager may be the speed of the fastest USB device associated with (or coupled to) the USB controller 620.

In some embodiments, the virtual composite USB device 622 may communicate with (and/or operate) one or more of the USB devices 630 using MA-USB protocols, via one or more of the connections 603-605. In such embodiments, the virtual composite USB device 622 (or the USB controller 620) and each of the one or more USB devices may be an MA-USB device. Further, the controller 620 may include a driver that supports MA-USB protocols and facilitates communication between the virtual composite USB device 622 (or the controller 620) and the one or more MA-USB devices of the USB devices 630. Accordingly, the computing device 610 may operate the one or more MA-USB devices of the USB devices 630, via the virtual composite USB device 622, without having to install any additional software (such as a driver that supports MA-USB operation).

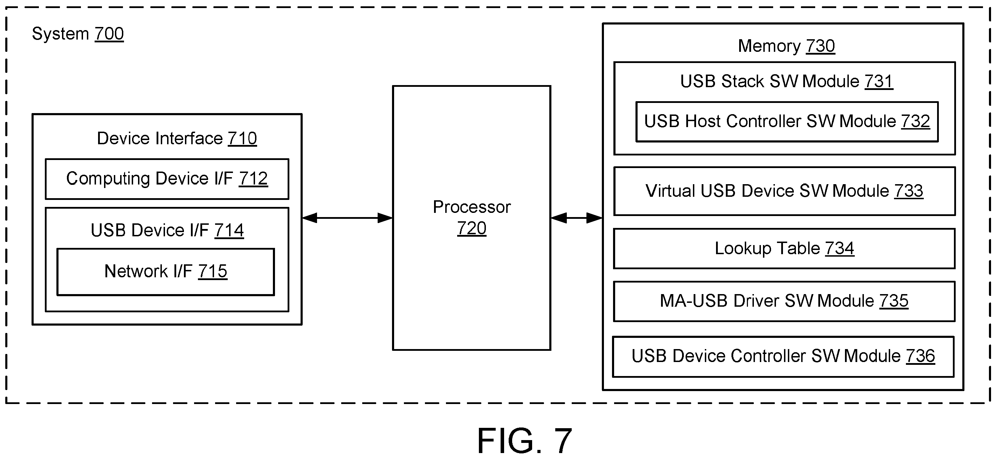

FIG. 7 shows a block diagram of an example system 700, according to some embodiments. The system 700 may be an embodiment of the USB controller 220A, 220B, 220C, and/or 620 of FIGS. 2A-2C and FIG. 6, respectively. In some embodiments, the system 700 may be configured to manage and virtually operate one or more USB devices (e.g., the USB devices 230A of FIG. 2A) coupled to the system 700. Further, the system 700 may operate as a USB host device and a USB device (or dual role device). As shown in FIG. 7, the system 700 may include a device interface ("I/F") 710, a processor 720, and a memory 730.

In some embodiments, the device I/F 710 may include a computing device I/F 712 and a USB device I/F 714. The computing device I/F 712 may be configured to transmit data to, and receive data from, a computing device that is a USB host device (e.g., the computing device 210A of FIG. 2A) and that is coupled to the system 700 via a wired connection. The computing device I/F 712 may also be configured to communicate with the processor 720 and/or the memory 730. The USB device I/F 714 may be configured to transmit data to, and receive data from, one or more USB devices (e.g., the USB devices 230A of FIG. 2A) coupled to the system 700. In some embodiments, the USB device I/F 714 may include a network I/F 715 configured to transmit data to, and receive data from, one or more USB devices via a network (e.g., the network 208C of FIG. 2C). The network I/F 715 may include a network socket. The USB device I/F 714 or the network I/F 715 may be configured to communicate with the processor 720 and/or the memory 730.

For purposes of discussion herein, the processor 720 is shown in FIG. 7 as being coupled to the device interface 710 and the memory 730. For actual embodiments, the device interface 710, the processor 720, and/or the memory 730 may be connected together using one or more buses (not shown for simplicity). It is noted that, in some embodiments, the system 700 may be an embedded system, a system on a chip, an application specific integrated circuit (ASIC) or other integrated circuit (IC) of a dongle, thin client, or other electronic device.

The memory 730 may include a non-transitory computer-readable medium (including one or more nonvolatile memory elements, such as EPROM, EEPROM, Flash memory, a hard drive, and the like) that may store at least the following:
- a USB stack SW module 731 that includes a USB host controller SW module 732 configured to (i) manage USB transactions (e.g., data exchanges) between the system 700 and one or more USB devices coupled to the system 700 via the USB device I/F 714, (ii) enumerate the one or more USB devices, and/or (iii) abstract the one or more USB devices, where the USB stack SW module 731 is configured to:
   o use, combine (or aggregate), and/or modify information (e.g., one or more descriptors) received by the USB host controller SW module 732 from the one or more USB devices coupled to the system 700, to generate a set of descriptors associated with the virtual USB device SW module 733;
- the virtual USB device SW module 733 (also referred to herein as a "virtual USB device" or "virtual composite USB device") that includes the set of descriptors generated by the USB stack SW module 731, where the virtual USB device SW module 733 is configured to use the set of descriptors to virtually operate (e.g., control access to and/or communicate with) the one or more USB devices coupled to the system 700, via the USB host controller SW module 732 and the USB device I/F 714;
- a lookup table 734 configured to store a mapping (or translation) of one or more descriptors received by the USB host controller SW module 732 to one or more descriptors modified (or generated) by the USB stack SW module 731, where the lookup table 734 may be used by the virtual USB device SW module 733 to operate the one or more USB devices coupled to the system 700;
- an MA-USB driver SW module 735 (also referred to herein as an "MA-USB driver") configured to support MA-USB protocols (or facilitate communication between the system 700 and one or more MA-USB devices coupled to the system 700 using MA-USB protocols); and
- a USB device controller SW module 736 configured to enable the system 700 to communicate with a USB host device coupled to the system 700, via the computing device I/F 712;

Each software module includes instructions that, when executed by the system 700, cause the system 700 to perform the corresponding functions.

The system 700 may include any suitable one or more processors (e.g., the processor 720) capable of executing scripts or instructions of one or more software programs stored in the system 700 (such as in the memory 730). For example, the system 700 may execute the USB host controller SW module 732 to enumerate one or more USB devices coupled to the system 700 via the USB device I/F 714 (and/or the network I/F 715). During the enumeration, the USB host controller SW module 732 may detect each of the one or more USB devices, and receive a set of descriptors from each of the one or more USB devices. In some embodiments, the system 700 may execute the USB stack SW module 731 to use, aggregate, or combine the received descriptors, and/or modify one or more of the received descriptors, in order to generate a set of descriptors associated with the virtual USB device SW module 733. In such embodiments, the USB stack SW module 731 may output a mapping of the generated set of descriptors to the received sets of descriptors, to the lookup table 734 for storage. Once the set of descriptors associated with the virtual USB device SW module 733 is generated (or fully synthesized), the system 700 may execute the USB stack SW module 731 to output the generated set of descriptors to the virtual USB device SW module 733.

In embodiments where the system 700 is coupled to a computing device that is a USB host device (e.g., the computing device 210A of FIG. 2) via the computing device I/F 712, the computing device may enumerate the system 700. During the enumeration, the USB device controller SW module 736 may receive, via the computing device I/F 712, an address assigned by the computing device (e.g., the address A of FIG. 6), and the USB device controller SW module 736 may store the address in the memory 730. Further, during the enumeration, the USB device controller SW module 736 may retrieve the set of descriptors from the virtual USB device SW module 733, and transmit the set of descriptors, via the computing device I/F 712, to the computing device. In some embodiments, the computing device may use the set of descriptors to identify and load one or more drivers (e.g., standard device drivers) stored in, for example, the operating system of the computing device. The computing system may further use the one or more drivers to communicate with the virtual USB device SW module 733. Put differently, the computing system may communicate with each of the one or more USB devices coupled to the system 700 via the virtual USB device SW module 733. However, because the system 700 is assigned, by the computing system, one address which the system 700 may include in one or more packets transmitted from the system 700 to the computing system, the system 700 may appear to the computing system as a single device.

In some embodiments, at least one of the one or more USB devices coupled to the system 700 may be an MA-USB device. In such embodiments, the USB host controller SW module 732 and the USB device I/F 714 may use the MA-USB driver SW module 735 to enumerate and/or abstract the one or more MA-USB devices. Further, the USB host controller SW module 732 and the USB device I/F 714 may use the MA-USB driver SW module 735 to manage communications between the system 700 and the one or more MA-USB devices. Consequently, when the computing device is coupled to the system 700, the computing device may communicate with the one or more MA-USB devices via the virtual USB device SW module 733, without having to install any additional software (e.g., a driver that supports MA-USB protocols).

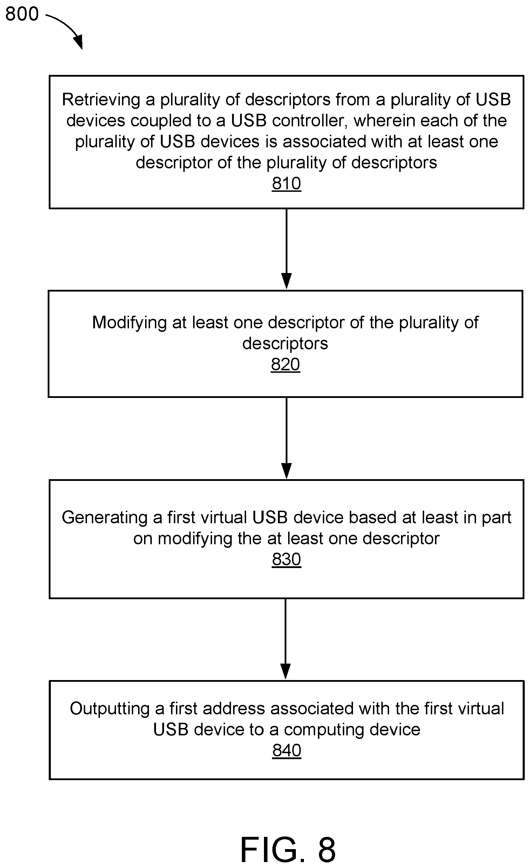

FIG. 8 shows an illustrative flowchart of an example operation 800, in accordance with some embodiments. The example operation 800 may be performed by a USB controller (e.g., the USB controller 220A-220C and/or 620 of FIGS. 2A-2C and 6, respectively, and/or the system 700 of FIG. 7). In some aspects, the USB controller may comprise an MA-USB device.

In some embodiments, the method 800 may include retrieving a plurality of descriptors (e.g., the sets of descriptors X, Y, and Z of FIG. 6) from a plurality of USB devices (e.g., the USB devices 630 of FIG. 6) coupled to the USB controller (e.g., the USB controller 620 of FIG. 6), where each of the plurality of USB devices is associated with at least one descriptor of the plurality of descriptors (810). In some aspects, one or more USB devices of the plurality of USB devices may be coupled to the USB controller via a wireless communication channel. In some embodiments, retrieving the plurality of descriptors from the plurality of USB devices may include enumerating each of the plurality of USB devices. Further, in some embodiments, the plurality of descriptors may include, for each USB device of the plurality of USB devices, a device descriptor, at least one configuration descriptor, at least one interface descriptor, and/or at least one endpoint descriptor. Further, in some embodiments, each of one or more first USB devices of the plurality of USB devices may include a HID (e.g., the first HID 532A or the second HID 533A of FIG. 5A). In such embodiments, the plurality of descriptors may further include, for each of the one or more first USB devices that includes a HID, a HID report descriptor and/or at least one report descriptor (e.g., the report descriptors 590A1 or 590A2 of FIG. 5A).

In some embodiments, the method 800 may further include modifying at least one descriptor of the plurality of descriptors (820). In some aspects, modifying the at least one descriptor may include renumbering the at least one descriptor. Further, in some embodiments, the at least one descriptor may include an interface descriptor, an endpoint descriptor, and/or a report descriptor. In embodiments where the at least one descriptor includes a report descriptor, the modified report descriptor (e.g., the report descriptor 590B of FIG. 5B) may be associated with each of the one or more first USB devices that includes a HID. For example, the modified report descriptor may include a plurality of report IDs, and in some aspects, each of the one or more first USB devices that includes a HID may be associated with at least one report ID of the plurality of report IDs. Further, in some aspects, the plurality of report IDs may be sequentially numbered.

In some embodiments, the method 800 may further include generating a first virtual USB device (e.g., the virtual USB device 222A-222C of FIGS. 2A-2C, respectively, and/or the virtual composite USB device 622 of FIG. 6) based at least in part on modifying the at least one descriptor (830). In some aspects, the first virtual USB device may be associated with each of the plurality of USB devices. For example, the first virtual USB device may include, as an abstraction, each of the plurality of USB devices. Further, in some embodiments, the method 800 may include outputting a first address (e.g., the address A of FIG. 6) associated with the first virtual USB device to a computing device (e.g., the computing device 210A of FIG. 2A) (840). The first address may represent an address assigned to the USB controller during the enumeration process. Further, the USB device may include the first address in one or more data packets transmitted to the computing device.

In some embodiments, the method 800 may further include detecting that a first USB device of the plurality of USB devices is decoupled from the USB controller, and that one or more second USB devices of the plurality of USB devices are still coupled to the USB controller. The method 800 may further include retrieving a plurality of descriptors from the one or more second USB devices during, for example, an enumeration of the one or more second USB devices. The method 800 may further include modifying at least one descriptor of the plurality of descriptors retrieved from (or associated with) the one or more second USB devices still coupled to the USB controller. Further, the method 800 may include generating a second virtual USB device based at least in part on modifying the at least one descriptor of the plurality of descriptors associated with the one or more second USB devices still coupled to the USB controller. The method 800 may also include outputting a second address associated with the second virtual USB device to the computing device. In some aspects, the second address may represent an address assigned to the USB controller by the computing device during the enumeration of the one or more second USB devices still coupled to the USB controller.

Those of skill in the art will appreciate that information and signals may be represented using any of a variety of different technologies and techniques. For example, data, instructions, commands, information, signals, bits, symbols, and chips that may be referenced throughout the above description may be represented by voltages, currents, electromagnetic waves, magnetic fields or particles, optical fields or particles, or any combination thereof.

Further, those of skill in the art will appreciate that the various illustrative logical blocks, modules, circuits, and algorithm steps described in connection with the aspects disclosed herein may be implemented as electronic hardware, computer software, or combinations of both. To clearly illustrate this interchangeability of hardware and software, various illustrative components, blocks, modules, circuits, and steps have been described above generally in terms of their functionality. Whether such functionality is implemented as hardware or software depends upon the particular application and design constraints imposed on the overall system. Skilled artisans may implement the described functionality in varying ways for each particular application, but such implementation decisions should not be interpreted as causing a departure from the scope of the disclosure.

The methods, sequences or algorithms described in connection with the aspects disclosed herein may be embodied directly in hardware, in a software module executed by a processor, or in a combination of the two. A software module may reside in RAM memory, flash memory, ROM memory, EPROM memory, EEPROM memory, registers, hard disk, a removable disk, a CD-ROM, or any other form of storage medium known in the art. An exemplary storage medium is coupled to the processor such that the processor can read information from, and write information to, the storage medium. In the alternative, the storage medium may be integral to the processor.

In the foregoing specification, embodiments have been described with reference to specific examples thereof. It will, however, be evident that various modifications and changes may be made thereto to the extent within the scope defined by the appended claims. The specification and drawings are, accordingly, to be regarded in an illustrative sense rather than a restrictive sense.

## Claims

1. A method performed by a Universal Serial Bus, USB, controller, the method comprising:
retrieving a plurality of descriptors from a plurality of USB devices coupled to the USB controller using media agnostic USB, MA-USB, wherein each of the plurality of USB devices is associated with at least one descriptor of the plurality of descriptors;
modifying at least one descriptor of the plurality of descriptors;
generating a first virtual USB device based at least in part on modifying the at least one descriptor; and
outputting a first address associated with the first virtual USB device to a computing device using USB.

2. The method of claim 1, wherein the first virtual USB device is associated with each of the plurality of USB devices.

3. The method of claim 1 or claim 2, wherein the modifying of the at least one descriptor comprises renumbering the at least one descriptor.

4. The method of any one of the preceding claims, wherein the at least one descriptor comprises an interface descriptor.

5. The method of any one of the preceding claims, wherein the at least one descriptor comprises an endpoint descriptor.

6. The method of any one of the preceding claims, further comprising:
detecting that a first USB device of the plurality of USB devices is decoupled from the USB controller and that one or more second USB devices of the plurality of USB devices are still coupled to the USB controller;
modifying at least one descriptor of the plurality of descriptors associated with the one or more second USB devices still coupled to the USB controller;
generating a second virtual USB device based at least in part on modifying the at least one descriptor of the plurality of descriptors associated with the one or more second USB devices still coupled to the USB controller; and
outputting a second address associated with the second virtual USB device to the computing device.

7. The method of any one of the preceding claims, wherein the retrieving of the plurality of descriptors from the plurality of USB devices comprises enumerating each of the plurality of USB devices.

8. The method of any one of the preceding claims, wherein:
each of one or more first USB devices of the plurality of USB devices comprises a human interface device, HID;
modifying the at least one descriptor of the plurality of descriptors includes modifying a report descriptor; and
the modified report descriptor is associated with each of the one or more first USB devices comprising a HID.

9. The method of claim 8, wherein the modified report descriptor includes a plurality of report identifiers, IDs, and wherein each of the one or more first USB devices comprising a HID is associated with at least one report ID of the plurality of report IDs.

10. The method of claim 9, wherein the plurality of report IDs is sequentially numbered.

11. The method of any one of the preceding claims, wherein one or more USB devices of the plurality of USB devices are coupled to the USB controller via a wireless communication channel.

12. A Universal Serial Bus, USB, controller comprising:
a processing system; and
a memory storing instructions that, when executed by the processing system, cause the USB controller to:
retrieve a plurality of descriptors from a plurality of USB devices coupled to the USB controller using media agnostic USB, MA-USB, wherein each of the plurality of USB devices is associated with at least one descriptor of the plurality of descriptors;
modify at least one descriptor of the plurality of descriptors;
generate a first virtual USB device based at least in part on modifying the at least one descriptor; and
output a first address associated with the first virtual USB device to a computing device using USB.

13. The USB controller of claim 12, wherein the first virtual USB device is associated with each of the plurality of USB devices.

14. The USB controller of claim 12 or claim 13, wherein the modifying of the at least one descriptor comprises renumbering the at least one descriptor; and/or
wherein the at least one descriptor comprises an interface descriptor; and/or
wherein the at least one descriptor comprises an endpoint descriptor; and/or
wherein one or more USB devices of the plurality of USB devices are coupled to the USB controller via a wireless communication channel; and/or
wherein the USB controller comprises a dongle or a thin client.

15. A system comprising:
a computing device;
a plurality of Universal Serial Bus, USB, devices; and
the USB controller according to any one of claims 12 to 14, coupled to the computing device and the plurality of USB devices.

## Patentansprüche

1. Verfahren, das von einem Universal Serial Bus- (USB) Controller durchgeführt wird, wobei das Verfahren umfasst:
Abrufen einer Vielzahl von Deskriptoren von einer Vielzahl von USB-Geräten, die über Media Agnostic USB (MA-USB) mit dem USB-Controller gekoppelt sind, wobei jedes der Vielzahl von USB-Geräten mindestens einem Deskriptor aus der Vielzahl von Deskriptoren zugeordnet ist;
Modifizieren mindestens eines Deskriptors aus der Vielzahl von Deskriptoren;
Erzeugen eines ersten virtuellen USB-Geräts, das zumindest teilweise basierend auf der Modifikation des mindestens einen Deskriptors erzeugt wird; und
Ausgeben einer ersten Adresse, die dem ersten virtuellen USB-Gerät zugeordnet ist, an ein Rechengerät unter Verwendung von USB.

2. Verfahren nach Anspruch 1, wobei das erste virtuelle USB-Gerät jedem der mehreren USB-Geräte zugeordnet ist.

3. Verfahren nach Anspruch 1 oder Anspruch 2, wobei das Modifizieren des mindestens einen Deskriptors das Umnummerieren des mindestens einen Deskriptors umfasst.

4. Verfahren nach einem der vorhergehenden Ansprüche, wobei der mindestens eine Deskriptor einen Schnittstellen-Deskriptor umfasst.

5. Verfahren nach einem der vorhergehenden Ansprüche, wobei der mindestens eine Deskriptor einen Endpunkt-Deskriptor umfasst.

6. Verfahren nach einem der vorhergehenden Ansprüche, das ferner umfasst:
Erfassen, dass ein erstes USB-Gerät aus der Vielzahl von USB-Geräten vom USB-Controller entkoppelt ist und dass ein oder mehrere zweite USB-Geräte aus der Vielzahl von USB-Geräten weiterhin mit dem USB-Controller gekoppelt sind;
Modifizieren mindestens eines Deskriptors aus der Vielzahl von Deskriptoren, die den einen oder mehreren zweiten USB-Geräten zugeordnet sind, die noch mit dem USB-Controller gekoppelt sind;
Erzeugen eines zweiten virtuellen USB-Geräts zumindest teilweise basierend auf der Modifikation des mindestens einen Deskriptors aus der Vielzahl von Deskriptoren, die den einen oder mehreren zweiten USB-Geräten zugeordnet sind, die noch mit dem USB-Controller gekoppelt sind; und
Ausgeben einer zweiten Adresse, die dem zweiten virtuellen USB-Gerät zugeordnet ist, an das Rechengerät.

7. Verfahren nach einem der vorhergehenden Ansprüche, wobei das Abrufen der Vielzahl von Deskriptoren aus der Vielzahl von USB-Geräten das Aufzählen jedes einzelnen der Vielzahl von USB-Geräten umfasst.

8. Verfahren nach einem der vorhergehenden Ansprüche, wobei:
jedes der einen oder mehreren ersten USB-Geräte der Vielzahl von USB-Geräten ein Human Interface Device (HID) enthält;
das Modifizieren des mindestens einen Deskriptors der Vielzahl von Deskriptoren das Modifizieren eines Berichts-Deskriptors umfasst; und
der modifizierte Berichts-Deskriptor jedem der einen oder mehreren ersten USB-Geräte zugeordnet ist, die ein HID enthalten.

9. Verfahren nach Anspruch 8, wobei der modifizierte Berichts-Deskriptor eine Vielzahl von Berichtsidentifikatoren (IDs) enthält, und wobei jedes der einen oder mehreren ersten USB-Geräte, die ein HID umfassen, mindestens einer Berichts-ID aus der Vielzahl von Berichts-IDs zugeordnet ist.

10. Verfahren nach Anspruch 9, wobei die Vielzahl von Bericht-IDs fortlaufend nummeriert ist.

11. Verfahren nach einem der vorhergehenden Ansprüche, wobei ein oder mehrere USB-Geräte aus der Vielzahl von USB-Geräten über einen drahtlosen Kommunikationskanal mit dem USB-Controller gekoppelt sind.

12. Universal Serial Bus (USB)-Controller, der umfasst: ein
Verarbeitungssystem; und
einen Speicher, der Befehle speichert, die, wenn sie vom Verarbeitungssystem ausgeführt werden, den USB-Controller zu Folgendem veranlassen:
Abrufen einer Vielzahl von Deskriptoren von einer Vielzahl von USB-Geräten, die über Media Agnostic USB (MA-USB) mit dem USB-Controller gekoppelt sind, wobei jedes der Vielzahl von USB-Geräten mindestens einem Deskriptor aus der Vielzahl von Deskriptoren zugeordnet ist;
Modifizieren mindestens eines Deskriptors aus der Vielzahl von Deskriptoren;
Erzeugen eines ersten virtuellen USB-Geräts, das zumindest teilweise basierend auf der Modifikation des mindestens einen Deskriptors erzeugt wird; und
Ausgeben einer ersten Adresse, die dem ersten virtuellen USB-Gerät zugeordnet ist, an ein Rechengerät unter Verwendung von USB.

13. USB-Controller nach Anspruch 12, wobei das erste virtuelle USB-Gerät jedem der mehreren USB-Geräte zugeordnet ist.

14. USB-Controller nach Anspruch 12 oder Anspruch 13, wobei das Modifizieren des mindestens einen Deskriptors das Umnummerieren des mindestens einen Deskriptors umfasst; und/oder
wobei der mindestens eine Deskriptor einen Schnittstellen-Deskriptor umfasst; und/oder
wobei der mindestens eine Deskriptor einen Endpunkt-Deskriptor umfasst; und/oder
wobei ein oder mehrere USB-Geräte aus der Vielzahl von USB-Geräten über einen drahtlosen Kommunikationskanal mit dem USB-Controller gekoppelt sind; und/oder
wobei der USB-Controller einen Dongle oder einen Thin Client umfasst.

15. System, das umfasst:
ein Rechengerät;
eine Vielzahl von Universal Serial Bus- (USB) Geräten; und
den USB-Controller nach Anspruch 12 bis 14, der mit dem Rechengerät und der Vielzahl von USB-Geräten gekoppelt ist.

## Revendications

1. Procédé réalisé par un contrôleur bus série universel, Universal Serial Bus USB, le procédé comprenant :
la récupération d'une pluralité de descripteurs en provenance d'une pluralité de dispositifs USB couplés au contrôleur USB en utilisant un USB média-agnostique, Media Agnostic USB, MA-USB, dans lequel chacun de la pluralité de dispositifs USB est associé à au moins un descripteur de la pluralité de descripteurs ;
la modification d'au moins un descripteur de la pluralité de descripteurs ;
la génération d'un premier dispositif USB virtuel sur la base au moins en partie de la modification de l'au moins un descripteur ; et
l'envoi en sortie d'une première adresse associée au premier dispositif USB virtuel à un dispositif informatique utilisant USB.

2. Procédé de la revendication 1, dans lequel le premier dispositif USB virtuel est associé à chacun de la pluralité de dispositifs USB.

3. Procédé de la revendication 1 ou de la revendication 2, dans lequel la modification de l'au moins un descripteur comprend la renumérotation de l'au moins un descripteur.

4. Procédé de l'une quelconque des revendications précédentes, dans lequel l'au moins un descripteur comprend un descripteur d'interface.

5. Procédé de l'une quelconque des revendications précédentes, dans lequel l'au moins un descripteur comprend un descripteur de point d'extrémité.

6. Procédé de l'une quelconque des revendications précédentes, comprenant en outre :
la détection qu'un premier dispositif USB de la pluralité de dispositifs USB est découplé du contrôleur USB et qu'un ou plusieurs seconds dispositifs USB de la pluralité de dispositifs USB sont toujours couplés au contrôleur USB ;
la modification d'au moins un descripteur de la pluralité de descripteurs associés à l'un ou aux plusieurs seconds dispositifs USB toujours couplés au contrôleur USB ;
la génération d'un second dispositif USB virtuel sur la base au moins en partie de la modification de l'au moins un descripteur de la pluralité de descripteurs associés à l'un ou aux plusieurs seconds dispositifs USB toujours couplés au contrôleur USB ; et
l'envoi en sortie d'une seconde adresse associée au second dispositif USB virtuel au dispositif informatique.

7. Procédé de l'une quelconque des revendications précédentes, dans lequel la récupération de la pluralité de descripteurs en provenance de la pluralité de dispositifs USB comprend l'énumération de chacun de la pluralité de dispositifs USB.

8. Procédé de l'une quelconque des revendications précédentes, dans lequel :
chacun d'un ou de plusieurs premiers dispositifs USB de la pluralité de dispositifs USB comprend un dispositif d'interface humaine, Human Interface Device HID ;
la modification de l'au moins un descripteur de la pluralité de descripteurs inclut la modification d'un descripteur de rapport ; et
le descripteur de rapport modifié est associé à chacun de l'un ou des plusieurs premiers dispositifs USB comprenant un HID.

9. Procédé de la revendication 8, dans lequel le descripteur de rapport modifié inclut une pluralité d'identifiants de rapport, Report IDentifiers IDs, et dans lequel chacun de l'un ou des plusieurs premiers dispositifs USB comprenant un HID est associé à au moins un ID de rapport de la pluralité d'IDs de rapport.

10. Procédé de la revendication 9, dans lequel la pluralité d'IDs de rapport est numérotée séquentiellement.

11. Procédé de l'une quelconque des revendications précédentes, dans lequel un ou plusieurs dispositifs USB de la pluralité de dispositifs USB sont couplés au contrôleur USB par l'intermédiaire d'un canal de communication sans fil.

12. Contrôleur bus série universel, Universal Serial Bus USB, comprenant :
un système de traitement ; et
une mémoire stockant des instructions qui, lorsqu'elles sont exécutées par le système de traitement, amènent le contrôleur USB à :
récupérer une pluralité de descripteurs en provenance d'une pluralité de dispositifs USB couplés au contrôleur USB en utilisant USB média-agnostique, Media Agnostic USB, MA-USB, dans lequel chacun de la pluralité de dispositifs USB est associé à au moins un descripteur de la pluralité de descripteurs ;
modifier au moins un descripteur de la pluralité de descripteurs ;
générer un premier dispositif USB virtuel sur la base au moins en partie de la modification de l'au moins un descripteur ; et
envoyer en sortie une première adresse associée au premier dispositif USB virtuel à un dispositif informatique utilisant USB.

13. Contrôleur USB de la revendication 12, dans lequel le premier dispositif USB virtuel est associé à chacun de la pluralité de dispositifs USB.

14. Contrôleur USB de la revendication 12 ou de la revendication 13, dans lequel la modification de l'au moins un descripteur comprend la renumérotation de l'au moins un descripteur ; et/ou
dans lequel l'au moins un descripteur comprend un descripteur d'interface ; et/ou
dans lequel l'au moins un descripteur comprend un descripteur de point d'extrémité ; et/ou
dans lequel un ou plusieurs dispositifs USB de la pluralité de dispositifs USB sont couplés au contrôleur USB par l'intermédiaire d'un canal de communication sans fil ; et/ou
dans lequel le contrôleur USB comprend une clef électronique ou un client léger.

15. Système, comprenant :
un dispositif informatique ;
une pluralité de dispositifs bus série universel, Universal Serial Bus USB ; et
le contrôleur USB selon l'une quelconque des revendications 12 à 14, couplé au dispositif informatique et à la pluralité de dispositifs USB.
